# FASCICULE DE BREVET EUROPEEN

(11) **EP 3 281 921 B1**
(45) Date de publication et mention de la délivrance du brevet: **02.06.2021**
(21) Numéro de dépôt: 17184527.4
(22) Date de dépôt: 02.08.2017
(51) Int. Cl.: C03B 35/16, C03B 35/18, C03B 18/02

(54) **PROCEDE ET DISPOSITIF POUR UN ECHANGE DES ROULEAUX D'EXTRACTION DANS UN SAS DE SORTIE D'UN BAIN D'ETAIN AVEC UN SUPPORT CONTINU DU RUBAN DE VERRE FLOTTE**
VERFAHREN UND VORRICHTUNG FÜR DEN AUSTAUSCH DER EXTRAKTIONSROLLEN IN EINER AUSFAHRTSCHLEUSE EINES ZINNBADS MIT EINEM ENDLOSTRÄGER DES FLOATGLAS-BANDES
METHOD AND DEVICE FOR EXCHANGING THE EXTRACTION ROLLERS IN AN EXIT LOCK OF A TIN BATH WITH CONTINUOUS SUPPORT OF THE FLOATING GLASS RIBBON

(30) Priorité: 11.08.2016 FR 1657702
(43) Date de publication de la demande: 14.02.2018
(73) Titulaire: Fives Stein, 94700 Maisons Alfort (FR)
(72) Inventeur: KUHN, Wolf, 94700 Maisons Alfort (FR); DACHELET, Marc, 5590 CINEY (BE)
(74) Mandataire: IP Trust

(56) Documents cités:
- DE-A1- 2 159 597
- DE-B1- 3 004 806
- US-A- 3 284 073
- US-A- 3 754 880

## Description

L'invention est relative aux lignes de production de verre flotté, ou verre « float ». Elle concerne plus particulièrement le sas placé en sortie du bain d'étain pour relever le ruban de verre du bain d'étain et permettre sa reprise dans l'étenderie de recuisson tout en limitant la fuite de l'atmosphère présente au-dessus du bain d'étain.

La production de verre plat selon le procédé float consiste à fondre en continu la matière première dans un four de fusion et d'affinage pour obtenir un verre visqueux à environ 1100 °C, lequel est ensuite déversé sur un bain d'étain liquide sur lequel on forme le ruban de verre. Le verre quitte le bain d'étain à une température d'environ 620 °C pour entrer dans une étenderie de recuisson dans lequel il suit un refroidissement contrôlé jusqu'à la température ambiante avant d'être découpé en plaques. A la sortie du bain d'étain, la feuille de verre est relevée par un ensemble de rouleaux de levage, appelés rouleaux LOR, acronyme de l'anglais « Lift Out Roll ». Ces rouleaux, généralement au nombre de trois, permettent d'amener le ruban sur les rouleaux d'entrée de l'étenderie, lesquels sont situés sur un plan horizontal placé plus haut que le niveau de la surface du bain d'étain. Ces rouleaux LOR sont placés dans un sas de sortie du bain d'étain communément appelé « Dross box », situé entre le bain d'étain et l'étenderie de recuisson. Le sas de sortie du bain sert à contenir l'atmosphère N₂/H₂ du bain d'étain et à retenir les scories flottant sur l'étain. Or, sur le ruban s'accrochent de petites gouttes d'étain et de scories lors de son levage par les rouleaux LOR. Ces contaminations restent ensuite collées sur les rouleaux et engendrent leur encrassement. La surface des rouleaux, initialement lisse, devient rugueuse avec des aspérités approchant les dimensions du millimètre.

L'encrassement des rouleaux dégrade la qualité du verre. Leur nettoyage in situ est difficile et détériore également la qualité du verre lors du nettoyage. L'extraction des rouleaux pour nettoyage hors ligne est difficile et laborieuse.

US3754880 décrit un système d'extraction à cassette pour l'échange des rouleaux LOR. Le système mécanique d'entrainement des rouleaux reste cependant difficile à manipuler. Il est en effet nécessaire d'abaisser le rouleau à extraire de sorte que le ruban ne repose plus sur la table dudit rouleau avant de pouvoir extraire l'ensemble composé du rouleau, de ses paliers et de la structure support de l'ensemble. Par symétrie, le nouveau rouleau est introduit en position basse sous le ruban avant d'être relevé ensuite à sa hauteur de travail. Par ailleurs, l'absence du rouleau réduit le supportage du ruban. Ceci est particulièrement critique pour le premier rouleau LOR, côté bain d'étain, à cause du risque de blocage et de casse du ruban par frottement du verre sur le bord de la cuve du bain d'étain, dénommé « exit lip » en anglais.

DE3004806, US3284073 décrivent un procédé de remplacement de rouleaux porteurs. DE2159597 décrit un appareil pour traiter en continu des tôles d'acier laminé à froid destinées à être usinées à froid.

Pour assurer un maintien mécanique suffisant du ruban lors du remplacement d'un rouleau LOR, et limiter le risque de casse, la température et le format du ruban sont modifiés avant le changement d'un rouleau. Ainsi, une ou plusieurs des mesures suivantes sont appliquées :
- réduction de la température du verre pour augmenter sa viscosité ;
- augmentation de l'épaisseur du ruban pour renforcer sa tenue mécanique ;
- réduction de la largeur du ruban pour augmenter sa vitesse de défilement et ainsi réduire la durée sans supportage.

Après la mise en place d'un nouveau rouleau LOR, les paramètres de la production sont rétablis. Le temps nécessaire pour la modification du format et de la température du verre, le changement d'un rouleau, et le rétablissement de la production est important, sachant que le verre produit pendant cette opération est perdu et transformé en calcin.

L'invention permet notamment d'assurer le remplacement des rouleaux LOR tout en maintenant le supportage du ruban limitant ainsi le risque de casse. Elle permet également d'éviter ou de limiter la modification du ruban de verre nécessaire à l'opération, d'où une durée globale d'intervention plus faible et une moindre perte de production.

Selon un premier aspect, l'invention consiste en une installation d'entraînement d'un ruban de verre dans une ligne de production de verre flotté. L'installation comprend un sas de sortie d'un bain d'étain, le sas de sortie comprenant au moins un rouleau de levage du ruban. Plus précisément, le ruban comporte une table apte à supporter le ruban. L'installation comprend en outre un dispositif de remplacement d'au moins un rouleau à remplacer du sas par un nouveau rouleau. A cet effet, le dispositif de remplacement comporte un système de déplacement du rouleau à remplacer et du nouveau rouleau entre l'intérieur et l'extérieur du sas par un mouvement de translation selon un même sens de déplacement par rapport au sas. L'installation peut alors prendre au moins trois états par actionnement du système de déplacement :
- un état initial dans lequel la table du rouleau à remplacer est apte à supporter le ruban sur toute sa largeur à l'intérieur du sas, le nouveau rouleau étant placé sur un premier côté à l'extérieur du sas,
- un état final dans lequel la table du nouveau rouleau est apte à supporter à l'intérieur du sas le ruban sur toute sa largeur, le rouleau à remplacer étant placé sur un deuxième côté à l'extérieur du sas opposé au premier côté,
- un état intermédiaire dans lequel les tables des deux rouleaux sont à cheval entre l'intérieur et l'extérieur du sas et sont aptes à supporter simultanément au moins partiellement le ruban.

L'installation équipée d'un tel système de déplacement des rouleaux assure que lors du changement de rouleaux, dans l'état intermédiaire, la portion du ruban de verre supportée par le rouleau à remplacer n'est jamais sans support, le nouveau rouleau venant prendre le relais du supportage avant que le rouleau à remplacer ne fournisse plus aucun support.

Avantageusement, dans l'état final, la position du nouveau rouleau peut être identique, ou quasi-identique, à celle du rouleau à remplacer dans l'état initial. Ainsi, le nouveau rouleau prend exactement la place du nouveau rouleau. Il peut cependant être prévu que le nouveau rouleau, dans l'état final, soit légèrement décalé suivant l'axe de défilement du ruban dans le sas par rapport au rouleau à remplacer dans l'état initial, afin par exemple de tenir compte de correction de positionnement des rouleaux. Cependant, le nouveau rouleau apporte dans ce cas tout de même le même résultat que le rouleau à remplacer, c'est-à-dire que dans l'état final, le nouveau rouleau supporte le ruban de verre sur une longueur, dans le sens de défilement du ruban, qui est égale à celle supportée par le rouleau à remplacer dans l'état initial.

Selon un mode de réalisation, chacun du rouleau à remplacer et du nouveau rouleau est équipé d'une motorisation individuelle, de manière à former un ensemble fonctionnel indépendant l'un de l'autre. Le remplacement des rouleaux est ainsi facilité.

Le remplacement de deux rouleaux de conception usuelle en passant par l'état intermédiaire défini ci-dessus crée un vide sans support selon la largeur du ruban. Dans l'état intermédiaire, le ruban peut alors s'affaisser entre les deux tables des rouleaux et toucher les paliers ce qui engendre un arrêt de la ligne.

Des simulations et des tests ont permis de déterminer l'affaissement du ruban entre deux tables de support des rouleaux lors du remplacement d'un rouleau au sein d'une installation selon l'invention. Différents paramètres déterminent le degré de l'affaissement comme l'épaisseur ruban, la vitesse de défilement du ruban, la viscosité dynamique du verre en fonction de la température, ladite viscosité étant comprise entre 1,5*10^10 et 5*10^10 poises, la densité du verre, celle-ci étant par exemple de 2500 kg/m³ pour un verre sodocalcique, qui est le type de verre utilisé en grande majorité sur les lignes de verre flotté.

Du fait de la nature des paliers, pour éviter que le ruban ne vienne en contact avec ceux-ci, l'affaissement maximal admissible a été déterminé à 20 mm. Pour contenir le ruban à cette valeur d'affaissement, la distance entre les deux tables des rouleaux doit être limitée. Le tableau 1 suivant donne les valeurs maximales admissibles pour celle-ci, pour un affaissement du verre limité à 20 mm :

**Tableau 1**

| Epaisseur ruban mm | Vitesse m/min | Viscosité Poise | Distance maxi entre tables mm |
|---|---|---|---|
| 20 | 2 | 1,5*10^10 | 913 |
| 10 | 4 | 1,5*10^10 | 767 |
| 4 | 10 | 1,5*10^10 | 610 |
| 0,7 | 7 | 5*10^10 | 250 |

Pour un verre très épais de 20 mm, on peut ainsi admettre une distance maximale sans support du ruban de 900 mm. La distance maximale admissible se réduit à 770 mm environ pour un ruban de 10 mm d'épaisseur, à 610 mm environ pour un ruban de 4 mm d'épaisseur, et à 250 mm environ pour un ruban de 0,7 mm d'épaisseur (avec les vitesses et viscosités indiquées dans le tableau).

Pour des rouleaux LOR selon l'état de la technique, équipés de fusées de longueur conventionnelle, lorsque le rouleau à remplacer et le nouveau rouleau sont mis bout à bout, en contact l'un avec l'autre, la distance entre les tables des rouleaux est bien trop importante pour respecter ces distances et limiter ainsi l'affaissement du ruban à 20 mm pour éviter un contact du ruban avec les paliers ou les fusées. La situation devient particulièrement difficile pour un verre mince de 0,7 mm pour lequel il faut réduire la distance sans support à 250 mm, c'est-à-dire que la longueur de la fusée et de son palier ne doit pas dépasser 125 mm. Or, selon l'état de la technique, la fusée doit présenter une longueur suffisante pour traverser la paroi du sas avec sa bague d'étanchéité. Une longueur supplémentaire d'environ 50 mm est également à prévoir sur un côté pour la dilatation thermique du rouleau et le glissement de la fusée dans le palier. Une longueur supplémentaire d'environ 150 mm est également à prévoir pour traverser le palier et permettre la connexion à un système de refroidissement. Enfin, une longueur supplémentaire de 50 mm est encore à prévoir pour permettre le couplage avec un système d'entraînement.

Ainsi, la conception des rouleaux selon l'état de la technique amène en général à un écart de 1 à 1,5 m entre les tables des rouleaux mêmes aboutés lors de la mise en œuvre du dispositif de remplacement dans l'installation, ce qui peut provoquer un affaissement du ruban de verre trop important.

Ainsi, selon un mode de réalisation de l'invention, le dispositif de remplacement comprend une table intermédiaire entre les tables des rouleaux lorsque l'installation est dans l'état intermédiaire. La table intermédiaire est dans le prolongement de la table du rouleau à remplacer et de la table du nouveau rouleau pour supporter le ruban. La table intermédiaire est de préférence conçue pour apporter un support sensiblement en continu, aux jeux près, sur la largeur du ruban de verre, et éviter tout affaissement. En variante, la table intermédiaire peut servir à réduire les espaces vides sans support pour le ruban.

Selon un mode de réalisation, la distance maximale entre les tables des rouleaux selon le sens de déplacement des rouleaux est inférieure ou égale à 900 mm lorsque l'installation est dans l'état intermédiaire, de sorte que l'installation est adaptée au moins pour les rubans de verre d'épaisseur d'environ 20 mm. Pour des épaisseurs inférieures, la distance maximale entre les tables des rouleaux sera inférieure à 900 mm.

Dans l'état intermédiaire, le nouveau rouleau peut être abouté au rouleau à remplacer afin d'avoir un espace vide de support entre les tables des rouleaux qui est de largeur minimale.

Selon un deuxième aspect, l'invention concerne un procédé de remplacement d'un rouleau à remplacer par un nouveau rouleau dans une installation d'entraînement d'un ruban de verre dans une ligne de production de verre flotté telle que présentée ci-dessus. Le procédé comprend les étapes suivantes :
/1/ on positionne un nouveau rouleau sur un premier côté du sas, l'installation étant dans l'état initial,
/2/ on entraîne en rotation le nouveau rouleau,
/3/ on déplace le nouveau rouleau par un mouvement de translation selon un sens de remplacement vers l'intérieur du sas, et on déplace le rouleau à remplacer dans le même sens de remplacement vers l'extérieur du sas, l'installation étant dans l'état intermédiaire,
/4/ on déplace le rouleau à remplacer et le nouveau rouleau jusqu'à ce que l'installation soit dans l'état final.

Dans l'étape /2/ et pendant une partie au moins de la durée de l'état intermédiaire, le nouveau rouleau peut être entraîné à une vitesse de rotation périphérique sensiblement identique à celle du rouleau à remplacer, de manière à assurer la continuité de l'entraînement du ruban en défilement.

Cependant, dans l'étape /2/ et pendant une partie au moins de la durée de l'état intermédiaire, le nouveau rouleau peut être entraîné à une vitesse de rotation périphérique différente de celle du rouleau à remplacer pour exercer un effort latéral sur le ruban de verre de sorte de le maintenir dans l'axe du sas. Cette différente de vitesse permet notamment de compenser un désaxement éventuel du ruban, qui se produit par exemple par le déplacement des rouleaux lors du changement de rouleau.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
- Fig. 1 est une vue schématique en coupe transversale d'un sas de sortie du bain 1 au niveau d'un rouleau LOR selon l'état de la technique ;
- Fig. 2a et 2b sont des vues schématiques latérales montrant l'implantation des rouleaux LOR, l'un des rouleaux ayant été retiré sur la Fig. 2b;
- Fig. 3a à 3d sont des vues schématiques en coupe transversale d'un sas 1 de sortie du bain en cours de remplacement d'un rouleau LOR selon un mode de réalisation de l'invention dans lequel notamment les rouleaux et les paliers sont assemblés sous forme de cassette ;
- Fig. 4 est une vue schématique en coupe transversale d'un premier exemple de réalisation d'une liaison entre les extrémités de deux rouleaux LOR selon l'invention ;
- Fig. 5 est une vue schématique en coupe transversale d'un deuxième exemple de réalisation d'une liaison entre les extrémités de deux rouleaux LOR selon l'invention ; et,
- Fig. 6 est une vue schématique en coupe transversale d'une variante de réalisation de l'invention, impliquant notamment un chariot.

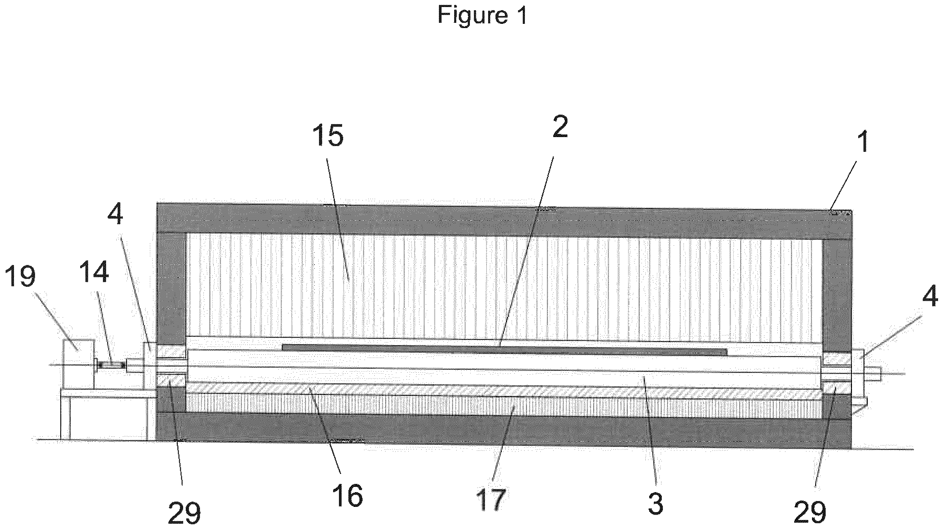

En se reportant au schéma de la figure 1 des dessins annexés, on peut voir schématiquement représentée une vue en coupe d'un sas 1 de sortie du bain d'étain selon l'état de la technique. Le ruban de verre 2 repose sur un rouleau LOR 3 maintenu entre deux paliers 4 et entrainé en rotation par une liaison cardan 14 avec un boitier mécanique 19 en liaison avec la mécanique des rouleaux de l'étenderie.

Des rideaux 15, 17 placés au-dessus et en dessous de chaque rouleau LOR assure l'étanchéité du sas de sortie du bain. Par commodité, ces rideaux ne sont pas représentés sur les autres figures. Sur la face inférieure du rouleau, une rangée de blocs graphites 16, ajustables en hauteur, assure également l'étanchéité et racle les aspérités molles présentes sur les rouleaux. Une bague d'étanchéité 29 assure la fermeture du sas autour de la fusée du rouleau.

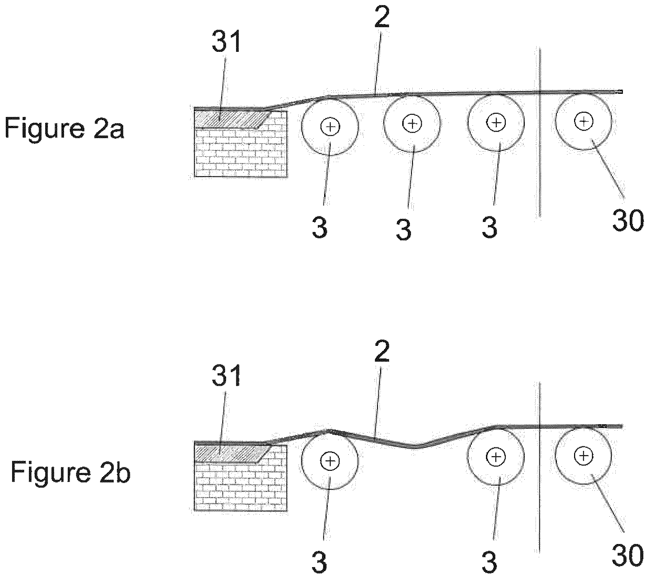

En se reportant à la figure 2a, on peut voir représenté un ruban 2 soulevé du bain d'étain 31 au moyen de trois rouleaux LOR 3 selon l'état de la technique. Après la sortie du sas, illustrée par un trait vertical sur cette figure, des rouleaux 30 assurent le transport du ruban dans l'étenderie. Sur la figure 2b, le second rouleau LOR a été retiré pour être remplacé par un nouveau rouleau. Le ruban 2 de verre n'étant plus supporté en cet endroit, il s'affaisse entre les deux rouleaux LOR restant.

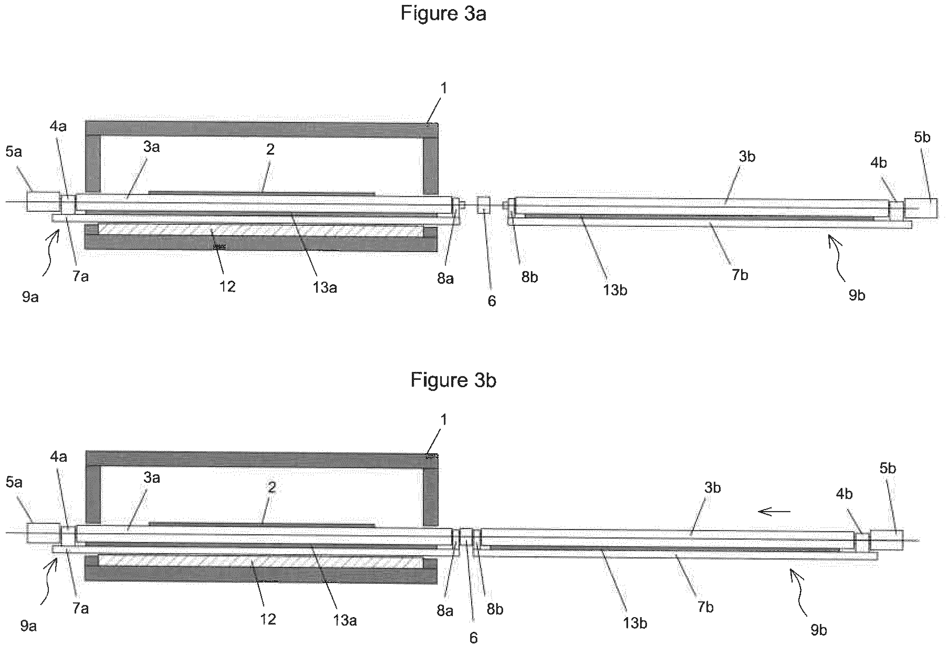

En se reportant aux schémas des figures 3a à 3d des dessins annexés, on peut voir schématiquement représentée une vue en coupe d'une installation d'entraînement d'un ruban 2 de verre dans une ligne de production de verre flotté comprenant notamment un sas 1 de sortie du bain d'étain, lors du remplacement d'un rouleau LOR 3a dit rouleau à remplacer par un rouleau LOR 3b dit nouveau rouleau, selon un mode de réalisation de l'invention dans lequel les rouleaux 3a, 3b sont embarqués dans une cassette.

De manière classique, chaque rouleau 3a, 3b comprend une table, c'est-à-dire l'enveloppe cylindrique du rouleau destinée à être en contact avec le ruban 2 dans le sas 1, et au moins une fusée, en pratique deux fusées, aux deux extrémités de la table et apte à entraîner la table en rotation.

Selon l'invention, chaque rouleau respectivement 3a, 3b est équipé de sa motorisation électrique respectivement 5a, 5b et est porté par une paire de paliers respectivement 4a/8a, 4b/8b. Plus précisément, la motorisation 5a, 5b d'un rouleau 3a, 3b est montée sur une des fusées, dite distale, l'autre fusée étant dite proximale. Les adjectifs distale et proximale sont pris ici en référence à la proximité entre les rouleaux 3a, 3b dans les positions initiale et finale qui seront explicitées plus loin, les fusées proximales étant plus proches l'une de l'autre que les fusées distales. Les fusées distales coopèrent avec les paliers 4a, 4b et les fusées proximales coopèrent avec les paliers 8a, 8b pour transmettre la rotation à la table des rouleaux 3a, 3b.

Un bloc ou un ensemble de blocs carbone respectivement 13a, 13b peut être placé sous la table du rouleau respectivement 3a, 3b pour assurer l'étanchéité. Ainsi, chaque ensemble forme une cassette respectivement 9a, 9b constituée d'un rouleau respectivement 3a, 3b, son bloc carbone respectivement 13a, 13b, ses paliers respectivement 4a/8a, 4b/8b et sa motorisation respectivement 5a, 5b portés par un châssis respectivement 7a, 7b.

L'installation comprend de plus un dispositif de remplacement du rouleau 3a à remplacer par le nouveau rouleau 3b grâce notamment à un système de déplacement des rouleaux 3a, 3b par un mouvement de translation dans un même sens de déplacement, c'est-à-dire selon une même direction sensiblement transversale à la direction générale de défilement du ruban 2 de verre dans le sas 1 et vers un même côté du sas 1.

Selon le mode de réalisation des figures 3a à 3d, les cassettes 9a, 9b peuvent être facilement introduites et extraites du sas 1 de sortie du bain selon une direction parallèle à l'axe d'un rouleau LOR grâce au dispositif de remplacement qui comprend un appui 12 à l'intérieur du sas 1 sur lequel les cassettes 9a, 9b peuvent glisser ou rouler.

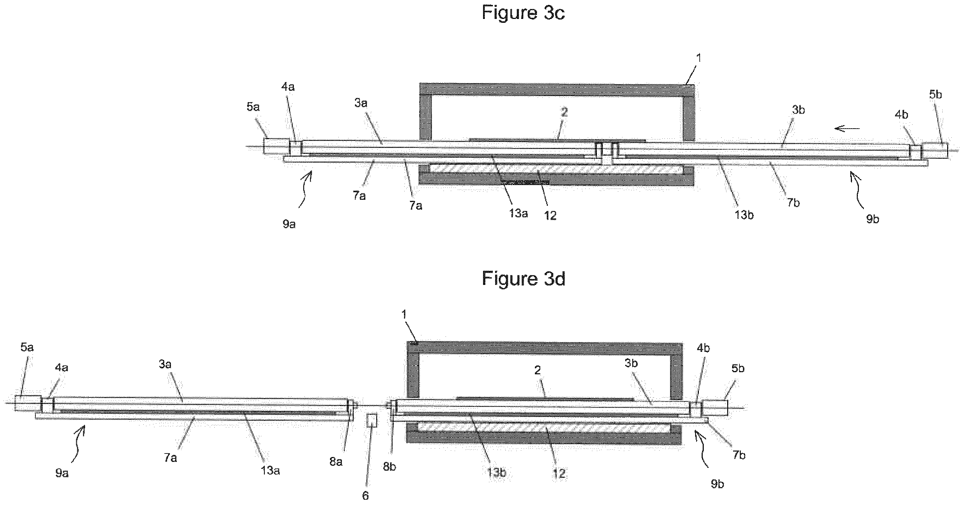

Ainsi, l'installation peut prendre au moins les trois états suivants, par actionnement du système de déplacement :
- un état initial dans lequel la table du rouleau 3a à remplacer est apte à supporter le ruban 2 sur toute sa largeur à l'intérieur du sas 1, le nouveau rouleau 3b étant placé sur un premier côté à l'extérieur du sas, par exemple sur le côté droit comme illustré sur la figure 3a ;
- un état final dans lequel la table du nouveau rouleau 3b est apte à supporter à l'intérieur du sas 1 le ruban 2 sur toute la largeur du ruban 2, le rouleau 3a à remplacer étant placé sur un deuxième côté à l'extérieur du sas 1 opposé au premier côté, par exemple sur le côté gauche comme illustré sur la figure 3d ;
- un état intermédiaire dans lequel les tables des deux rouleaux 3a, 3b sont à cheval entre l'intérieur et l'extérieur du sas 1 et sont aptes à supporter simultanément au moins partiellement le ruban 2.

De préférence, dans l'état intermédiaire, le ruban 2 est toujours supporté sur l'ensemble de sa largeur. Ainsi :
- soit les deux rouleaux 3a, 3b ne sont pas strictement alignés selon leur axe de rotation. Dans ce cas, les deux rouleaux 3a, 3b peuvent supporter une portion sur la largeur du ruban 2 qui leur est commune ;
- soit les deux rouleaux 3a, 3b sont alignés selon le même axe de rotation. Dans ce cas, les deux rouleaux 3a, 3b sont disposés de manière à assurer le support sur la largeur du ruban 2, l'un à la suite de l'autre.

Lorsque les deux rouleaux 3a, 3b sont alignés selon leur axe de rotation, l'extrémité des fusées proximales, située à l'opposé de la motorisation peut être prévue pour recevoir un ensemble de liaison de supportage du ruban 2 entre les deux rouleaux 3a, 3b. Plus précisément, l'ensemble de supportage comprend au moins une table intermédiaire présentant une surface extérieure destinée à supporter le ruban 2 de verre afin d'assurer la continuité, aux jeux près, du support du ruban 2 ainsi que son entraînement sur la ligne dans le sas 1 entre la table des deux rouleaux 3a, 3b dans l'état intermédiaire de l'installation.

Sur la figure 3a, l'installation est dans l'état initial : la cassette 9a comprenant le rouleau 3a à remplacer est en place à l'intérieur du sas de sortie du bain, les fusées du rouleau 3a à remplacer émergeant hors du sas 1. Le rouleau 3a à remplacer peut être légèrement abaissé par rapport à sa position de travail en vue de son remplacement, de sorte à limiter la pression exercée par le ruban 2 sur la table du rouleau 3a à remplacer.

Le nouveau rouleau 3b peut être maintenu en rotation à la même vitesse que les autres rouleaux du sas de sortie du bain. Cependant, un réusinage d'un rouleau dégradé peut légèrement diminuer son diamètre ce qui est ensuite pris en compte dans sa vitesse de rotation pour obtenir la même vitesse périphérique, c'est-à-dire la vitesse de rotation sur la surface de la table, que les autres rouleaux.

La cassette 9b de rechange, comprenant le nouveau rouleau 3b, est positionnée sur un côté, par exemple le côté droit de la figure 3a, du sas 1 de sortie du bain, l'axe du nouveau rouleau 3b étant placé dans le prolongement de celui du rouleau 3a. Le nouveau rouleau 3b peut être entraîné en rotation à la même vitesse que le rouleau 3a à remplacer après que l'ensemble de liaison entre deux rouleaux 3a, 3b ait été placé à l'extrémité de la fusée proximale du nouveau rouleau 3b.

L'ensemble de liaison selon cet exemple comprend une table 6 intermédiaire formée d'une unique pièce de forme générale cylindrique de révolution, de préférence en acier inoxydable ayant une bonne tenue mécanique. Le diamètre de la table 6 intermédiaire est sensiblement égal au diamètre de la table d'au moins un des rouleaux 3a, 3b.

Sur la figure 3b, le nouveau rouleau 3b est mis en relation avec le rouleau 3a à remplacer par l'intermédiaire de la table 6 intermédiaire. Plus précisément, les extrémités des fusées proximales des deux rouleaux 3a, 3b sont aboutées par l'intermédiaire de la table 6 intermédiaire, les paliers 8a, 8b portant les fusées proximales venant en contact, au jeu près, de part et d'autre de la table 6 intermédiaire. Ainsi, la table 6 intermédiaire vient prolonger la table du rouleau 3a à remplacer et la table du nouveau rouleau 3b dans l'espace séparant les deux tables en se plaçant entre les paliers 8a, 8b.

Sur la figure 3c, les deux cassettes 9a, 9b sont déplacées par un mouvement de translation sur l'appui 12 dans un même sens de déplacement, selon l'axe de rotation des rouleaux 3a, 3b et vers un même côté du sas, en l'occurrence vers le côté gauche de la figure 3c. Le nouveau rouleau 3b se déplace vers l'intérieur du sas, tandis que le rouleau 3a à remplacer se déplacer vers l'extérieur du sas 1. Dès lors, les deux rouleaux 3a, 3b sont à cheval entre l'intérieur et l'extérieur du sas 1, c'est-à-dire qu'ils comprennent chacun une portion à l'extérieur du sas et une portion à l'intérieur du sas 1. La mise en place de l'état intermédiaire permet ainsi de conserver la continuité du supportage du ruban 2 à l'intérieur du sas 1, jusqu'à ce que le nouveau rouleau 3b prenne la place du rouleau 3a à remplacer à l'intérieur du sas de sortie du bain d'étain.

Sur la figure 3d, le changement de rouleau LOR est terminé, le nouveau rouleau 3b étant en place et reprenant la fonction de supportage du rouleau 3a à remplacer, maintenant sorti à l'extérieur du sas 1. La table 6 intermédiaire est récupérée et l'ensemble 9a est évacué pour entretien. Le nouveau rouleau 3b peut si besoin être relevé en position de travail.

Lorsque le nouveau rouleau 3b doit à son tour être remplacé, les mêmes étapes avec un autre rouleau de remplacement peuvent être mises en œuvre, le sens de déplacement pouvant alors être vers la droite des figures 3a à 3d.

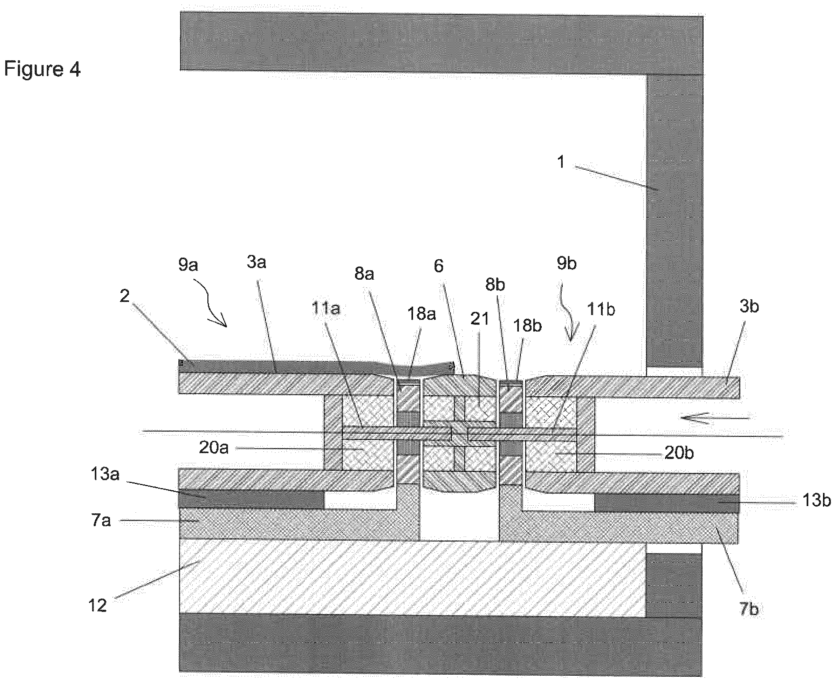

Sur la figure 4, on peut voir schématiquement représenté un premier exemple détaillé de l'ensemble de liaison entre les deux ensembles 9a, 9b selon le mode de réalisation de l'invention des figures 3a à 3d. Selon ce premier exemple, l'ensemble de liaison comprend la table 6 intermédiaire et les paliers 8a, 8b montés sur les fusées proximales.

Plus précisément, les extrémités des fusées proximales des rouleaux 3a, 3b, c'est-à-dire les extrémités opposées à la motorisation, comprennent chacune un axe 11a, 11b sur lequel est monté le palier 8a, 8b correspondant à la fusée proximale. L'extrémité de ces axes 11a, 11b s'engage dans la table 6 intermédiaire assurant une continuité entre la table des deux rouleaux 3a, 3b. Cette table 6 intermédiaire est montée glissante dans les axes 11a, 11b. Lors du remplacement du rouleau 3a à remplacer par le nouveau rouleau 3b, on place dans un premier temps la table 6 intermédiaire sur l'axe 11b du nouveau rouleau 3b, lequel est ensuite mis en rotation à une vitesse périphérique sensiblement identique à celle du rouleau 3a à remplacer. La cassette 9b comprenant le nouveau rouleau 3b est ensuite déplacée vers le rouleau 3a à remplacer pour venir introduire l'axe 11a du rouleau 3a à remplacer dans la table 6 intermédiaire. Les deux cassettes 9a, 9b sont ainsi en appui de part et d'autre de la pièce 6 de liaison, par exemple, comme illustré sur la figure 4, par leur palier 8a, 8b portant leur fusée proximale. Dans une variante de réalisation, la pièce 6 de liaison peut être liée mécaniquement au nouveau rouleau 3b pour être entraînée en rotation avec celui-ci pendant le remplacement du rouleau 3a à remplacer. En variante, la table 6 intermédiaire peut être entraînée en rotation par le rouleau 3a à remplacer. De préférence, la table 6 intermédiaire est de toute façon entraînée en rotation pour assurer la continuité de l'entraînement en défilement du ruban 2 entre les deux rouleaux 3a, 3b.

Ainsi, la table des rouleaux 3a, 3b, l'enveloppe cylindrique de la table 6 intermédiaire et les paliers 8a, 8b des fusées proximales forment ensemble une surface sensiblement continue pour le ruban 2 sur sa largeur, de manière à éviter tout affaissement du ruban pendant le remplacement d'un rouleau LOR.

L'extrémité proximale des tables des rouleaux 3a, 3b et les côtés de la table 6 intermédiaire peuvent être chanfreinés pour assurer une bonne reprise du bord du ruban 2 lors du changement de rouleau. Avantageusement, une pièce d'appui 18a, 18b en matériau présentant un faible coefficient de frottement avec le ruban 2 de verre, par exemple en graphite, peut être placée au-dessus des paliers 8a, 8b pour assurer une continuité de supportage du ruban 2 entre la table des rouleaux 3a, 3b, les paliers 8a, 8b et la table 6 intermédiaire.

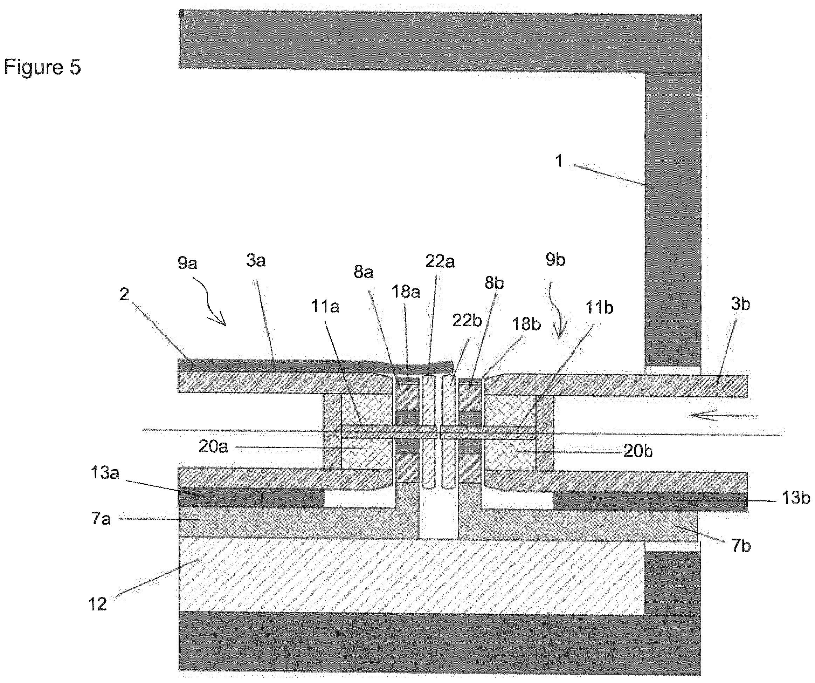

Sur la figure 5, on peut voir schématiquement représenté un deuxième exemple de réalisation d'un ensemble de liaison assurant, aux jeux près, la continuité entre les tables des rouleaux 3a, 3b. L'ensemble de liaison selon le deuxième exemple, comprend une table intermédiaire formée de deux pièces 22a, 22b intermédiaires, en forme de disque par exemple et, comme précédemment, les paliers 8a, 8b des fusées proximales. Chaque pièce respectivement 22a, 22b intermédiaire est placée sur l'extrémité de la fusée proximale d'un rouleau respectivement 3a, 3b pour assurer un supportage continu du ruban 2 lors du changement de rouleau. Ces pièces 22a, 22b peuvent être fixées sur les axes 11a, 11b des fusées proximales et sont entrainées en rotation avec les rouleaux 3a, 3b.

Les paliers 4a, 4b, 8a, 8b peuvent être refroidis pour évacuer les calories transmises par la table des rouleaux 3a, 3b. L'alimentation en fluide de refroidissement des paliers 8a, 8b sur les fusées proximales est réalisée depuis le coté motorisé du rouleau 3a, 3b correspondant et est intégrée dans la cassette 9a, 9b. Ainsi, le refroidissement des paliers 8a, 8b est assuré lors de la mise en place et du retrait des cassettes 9a, 9b du sas 1 de sortie du bain. Les paliers 8a, 8b sur les fusées proximales peuvent être de conception différente des paliers 4a, 4b sur les fusées distales. Les paliers 8a, 8b sont par exemple avantageusement étroits, sur la largeur du ruban, pour limiter la distance entre les tables des rouleaux 3a, 3b et faciliter le passage des bords du ruban 2 entre les tables des rouleaux 3a, 3b via la table 6, 22a, 22b intermédiaire. Les paliers 8a, 8b sur les fusées proximales peuvent être également conçus pour résister à la température ambiante dans le sas de sortie du bain lors du changement de rouleau, sans avoir besoin d'un refroidissement.

Pour limiter un choc thermique sur le ruban 2 lors du changement de rouleau, le nouveau rouleau 3b peut être préchauffé avant sa mise en place à une température voisine de celle du rouleau 3a à remplacer, en service. De plus, les extrémités des tables des rouleaux 3a, 3b et le l'ensemble de liaison, notamment la table intermédiaire, doivent avoir une température voisine de celle du reste de la table des rouleaux 3a, 3b afin d'assurer une continuité thermique. Or, les paliers 8a et 8b sur les fusées proximales pouvant être refroidis, il faut assurer leur découplage thermique des tables des rouleaux. Comme représenté notamment sur la figure 4, plusieurs mesures, seules ou en combinaison, peuvent servir à atteindre cet objectif :
- le lien entre la fusée et la table des rouleaux 3a, 3b est déporté vers l'intérieur du rouleau, c'est-à-dire en d'autres termes que la table s'étend au-delà de son contact avec la fusée, pour prolonger le chemin pour la conduction de chaleur,
- l'espace intérieur entre la table et l'axe 11a, 11b de la fusée proximale est isolé thermiquement au moyen d'un isolant 20a, 20b,
- la table 6, 22a, 22b intermédiaire est isolée des axes 11a, 11b avec un pont thermique réduit au moyen d'un isolant 21.

Un support de cassette non représenté sur les figures est positionné de part et d'autre du sas de sortie du bain pour porter les cassettes 9a, 9b avant et lors de leur introduction dans le sas de sortie du bain et pendant et après leur extraction du sas de sortie du bain.

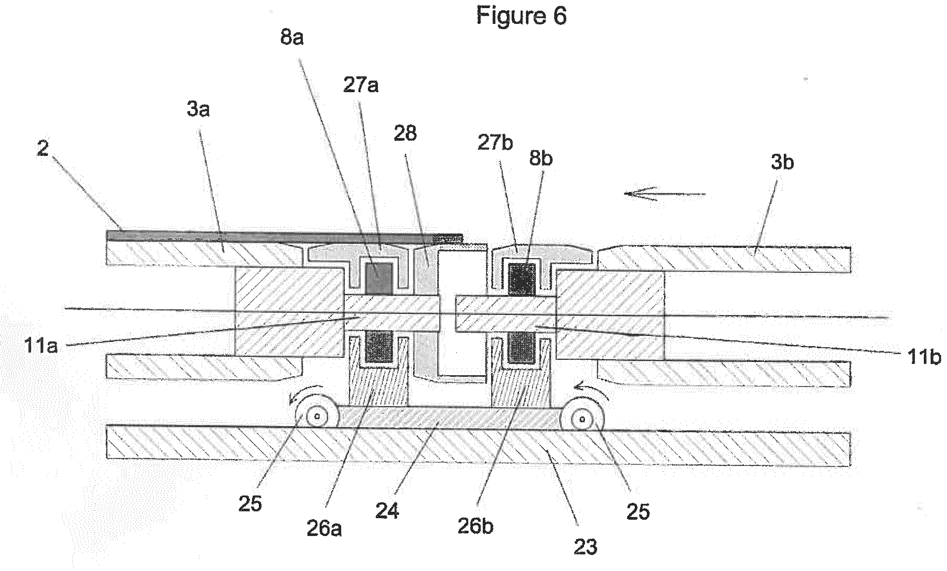

Selon un autre mode de réalisation représenté en figure 6, le système de déplacement du dispositif de remplacement peut comprendre un chariot 24. Ce chariot 24 est équipé de roulettes 25 glissant le long d'un rail 23. Un élément de ce rail 23 est placé à demeure dans le sas 1 sous chaque rouleau LOR. Un élément complémentaire du rail 23 est positionné de chaque côté à l'extérieur du sas 1 lors du remplacement d'un rouleau 3a à remplacer, dans le prolongement de celui placé dans le sas 1, pour assurer la continuité du chemin de roulement du chariot. Le chariot comprend deux supports 26a, 26b recevant les paliers 8a, 8b des fusées proximales des rouleaux 3a, 3b, le support 26a recevant le palier 8a du rouleau 3a à remplacer et le support 26b recevant le palier 8b du nouveau rouleau 3b. Ces supports 26a, 26b peuvent comprendre des parties démontables permettant de maintenir les paliers 8a, 8b sur ces supports 26a, 26b lors du déplacement des rouleaux 3a, 3b, ou de libérer les paliers 8a, 8b pour permettre le retrait du chariot 24. De même, les paliers 8a, 8b sont équipés de moyens de fixation permettant de les fixer sur les supports 26a, 26b lors du déplacement des rouleaux 3a, 3b, ou sur le bâti du sas 1 pour permettre le retrait du chariot 24.

Dans l'exemple de réalisation représenté en figure 6, l'ensemble de liaison comprend une pièce en graphite 27a, 27b positionnée sur le dessus de chacun des paliers 8a, 8b permettant de faciliter le glissement et de supporter le ruban 2 de verre de manière sensiblement continue lors que les rouleaux 3a, 3b sont déplacés selon un même sens de déplacement. L'ensemble de liaison comprend de plus, une table 28 intermédiaire entrainée en rotation avec le rouleau 3a à remplacer pour assurer une continuité de supportage du ruban entre les deux pièces 27a, 27b en graphite et donc entre les rouleaux 3a et 3b. Les pièces 2a, 27b en graphite peuvent optionnellement être remplacées par des petites roulettes coopérant avec le ruban pour permette au ruban 2 de glisser dessus.

Lors du remplacement du rouleau 3a à remplacer par le nouveau rouleau 3b, comme décrit précédemment, les vitesses périphériques de rotation des tables des rouleaux 3a, 3b sont réglées pour être sensiblement égales. Cependant, lors du déplacement des rouleaux 3a, 3b selon le sens de déplacement, un effort latéral, dans le sens de déplacement est exercé sur le ruban 2, ce qui peut entraîner le déplacement du ruban dans le sas 1 en l'éloignant de l'axe du sas, ce qui n'est pas souhaitable. Afin de compenser le déplacement du ruban 2, les vitesses de rotation périphérique des tables des rouleaux 3a, 3b peuvent être réglées pour être différentes et ramener le ruban dans l'axe du sas 1. Notamment, dans l'état intermédiaire de l'installation, la vitesse de rotation périphérique de la table du rouleau 3a à remplacer peut être augmentée par rapport à celle de la table du nouveau rouleau 3b afin d'exercer un effort latéral et provoquer le déplacement du ruban dans le sens opposé au sens de déplacement des rouleaux 3a, 3b.

Dans les modes et exemples de réalisation présentés ici, l'ensemble de liaison permet d'assurer la continuité entre les tables des rouleaux, afin de ne pas laisser un écart trop important entre les tables qui provoquerait un affaissement du ruban comme vu précédemment à l'aide du tableau 1. L'ensemble de liaison assure à la fois la continuité du support du ruban 2 de verre sur sa largeur et son entraînement en défilement dans le sas lors du changement de rouleau.

Toutefois, la présence d'un tel ensemble de liaison comprenant une table intermédiaire n'est pas obligatoire, dans la mesure où la conception même des rouleaux 3a, 3b peut permettre d'assurer une distance maximale admissible des tables des rouleaux 3a, 3b, par exemple lorsque les deux rouleaux 3a, 3b sont aboutés par leur fusée proximale, qui est inférieure à celle déterminée dans le tableau 1.

L'invention présente notamment les avantages suivants :
- échange rapide des rouleaux LOR avec peu voire pas de perturbation de la production ce qui autorise un changement de rouleau dès l'apparition de défauts sur le ruban à cause des rouleaux ;
- un nettoyage plus fréquent hors ligne des rouleaux LOR devient possible ;
- le risque de casse du ruban lors d'un échange de rouleau est largement réduit ;
- les opérations in situ de nettoyage des rouleaux LOR sont réduites ou éliminées. On peut noter que ces opérations de nettoyage in situ nécessitent d'ailleurs l'extraction des blocs de carbone ce qui accélère leur usure ;
- la durée de vie des blocs carbone et leur étanchéité est également améliorée grâce à la réduction du taux d'encrassement des rouleaux LOR ;
- la qualité du verre est nettement améliorée grâce à un nettoyage plus fréquent des rouleaux LOR et leur meilleure planéité de surface.

## Revendications

1. Installation d'entraînement d'un ruban (2) de verre dans une ligne de production de verre flotté, l'installation comprenant un sas (1) de sortie d'un bain d'étain, le sas de sortie comprenant au moins un rouleau (3a, 3b) de levage du ruban (2) comportant une table apte à supporter le ruban, l'installation comprenant en outre un dispositif de remplacement d'au moins un rouleau (3a) à remplacer du sas par un nouveau rouleau (3b), le dispositif de remplacement comportant un système de déplacement du rouleau (3a) à remplacer et du nouveau rouleau (3b) entre l'intérieur et l'extérieur du sas (1) par un mouvement de translation selon un même sens de déplacement par rapport au sas (1), l'installation pouvant prendre au moins trois états par actionnement du système de déplacement :
- un état initial dans lequel la table du rouleau (3a) à remplacer est apte à supporter le ruban (2) sur toute sa largeur à l'intérieur du sas (1), le nouveau rouleau (3b) étant placé sur un premier côté à l'extérieur du sas (1),
- un état final dans lequel la table du nouveau rouleau (3b) est apte à supporter à l'intérieur du sas (1) le ruban (2) sur toute sa largeur, le rouleau (3a) à remplacer étant placé sur un deuxième côté à l'extérieur du sas (1) opposé au premier côté,
- un état intermédiaire dans lequel les tables des deux rouleaux (3a, 3b) sont à cheval entre l'intérieur et l'extérieur du sas (1) et sont aptes à supporter simultanément au moins partiellement le ruban (2).

2. Installation de sortie du bain selon la revendication 1, dans laquelle, dans l'état final, la position du nouveau rouleau (3b) est identique à celle du rouleau (3a) à remplacer dans l'état initial.

3. Installation selon la revendication 1 ou la revendication 2, dans laquelle chacun du rouleau (3a) à remplacer et du nouveau rouleau (3b) est équipé d'une motorisation individuelle (5a, 5b).

4. Installation selon l'une quelconque des revendications précédentes, dans laquelle le dispositif de remplacement comprend une table (6, 22a, 22b, 28) intermédiaire entre les tables des rouleaux (3a, 3b) lorsque l'installation est dans l'état intermédiaire, la table (6, 22a, 22b, 28) intermédiaire étant dans le prolongement de la table du rouleau (3a) à remplacer et de la table du nouveau rouleau (3b) pour supporter le ruban (2).

5. Installation selon l'une quelconque des revendications précédentes, dans laquelle la distance maximale entre les tables des rouleaux (3a, 3b) selon le sens de déplacement des rouleaux (3a, 3b) est inférieure ou égale à 900 mm lorsque l'installation est dans l'état intermédiaire.

6. Installation selon la revendication précédente, dans laquelle, dans l'état intermédiaire, le nouveau rouleau (3b) est abouté au rouleau (3a) à remplacer.

7. Procédé de remplacement d'un rouleau (3a) à remplacer par un nouveau rouleau (3b) dans une installation d'entraînement d'un ruban (2) de verre dans une ligne de production de verre flotté dont la viscosité dynamique est comprise entre 1,5*10^10 et 5*10^10 poises, selon l'une quelconque des revendications précédentes, comprenant les étapes suivantes :
/1/ on positionne un nouveau rouleau (3b) sur un premier côté du sas (1), l'installation étant dans l'état initial,
/2/ on entraîne en rotation le nouveau rouleau (3b),
/3/ on déplace le nouveau rouleau (3b) par un mouvement de translation selon un sens de remplacement vers l'intérieur du sas (1), et on déplace le rouleau (3a) à remplacer dans le même sens de remplacement vers l'extérieur du sas (1), l'installation étant dans l'état intermédiaire,
/4/ on déplace le rouleau (3a) à remplacer et le nouveau rouleau (3b) jusqu'à ce que l'installation soit dans l'état final.

8. Procédé selon la revendication 7, dans lequel, dans l'étape /2/ et pendant au moins une partie de la durée de l'état intermédiaire, le nouveau rouleau (3b) est entraîné à une vitesse de rotation périphérique sensiblement identique à celle du rouleau (3a) à remplacer.

9. Procédé selon la revendication 7 ou la revendication 8, dans lequel, dans l'étape /2/ et pendant au moins une partie de la durée de l'état intermédiaire, le nouveau rouleau (3b) est entraîné à une vitesse de rotation périphérique différente de celle du rouleau (3a) à remplacer pour exercer un effort latéral sur le ruban (2) de verre de sorte de le maintenir dans l'axe du sas (1).

## Patentansprüche

1. Installation zum Antreiben eines Glasbandes (2) in einer Floatglas-Produktionslinie, wobei die Installation eine Auslaufschleuse (1) aus einem Zinnbad umfasst, wobei die Auslaufschleuse mindestens eine Rolle (3a, 3b) zum Anheben des Bandes (2) umfasst, umfassend eine Auflagefläche, die geeignet ist, das Band zu tragen, wobei die Installation ferner eine Vorrichtung zum Ersetzen mindestens einer zu ersetzenden Rolle (3a) der Schleuse durch eine neue Rolle (3b) umfasst, wobei die Ersatzvorrichtung ein System zum Bewegen der zu ersetzenden Rolle (3a) und der neuen Rolle (3b) zwischen der Innenseite und der Außenseite der Schleuse (1) durch eine Translationsbewegung in die gleiche Bewegungsrichtung bezüglich der Schleuse (1) umfasst, wobei die Installation durch Betätigung des Bewegungssystems mindestens drei Zustände einnehmen kann:
- einen Anfangszustand, in dem die Auflagefläche der zu ersetzenden Rolle (3a) geeignet ist, das Band (2) über seine gesamte Breite innerhalb der Schleuse (1) zu tragen, wobei die neue Rolle (3b) auf einer ersten Seite außerhalb der Luftschleuse (1) platziert wird,
- einen Endzustand, in dem die Auflagefläche der neuen Rolle (3b) geeignet ist, das Band (2) über seine gesamte Breite innerhalb der Luftschleuse (1) zu tragen, wobei die zu ersetzende Rolle (3a) auf einer zweiten Seite außerhalb der Luftschleuse (1) gegenüber der ersten Seite platziert wird,
- einen Zwischenzustand, in dem die Auflageflächen der beiden Rollen (3a, 3b) die Innen- und Außenseite der Schleuse (1) überspannen und geeignet sind, das Band (2) zumindest teilweise gleichzeitig zu tragen.

2. Badauslaufinstallation nach Anspruch 1, wobei im Endzustand die Position der neuen Rolle (3b) mit der Position der zu ersetzenden Rolle (3a) im Ausgangszustand identisch ist.

3. Installation nach Anspruch 1 oder Anspruch 2, wobei die zu ersetzende Rolle (3a) und die neue Rolle (3b) jeweils mit einer individuellen Motorisierung (5a, 5b) ausgestattet sind.

4. Installation nach einem der vorhergehenden Ansprüche, wobei die Ersatzvorrichtung eine Zwischenauflagefläche (6, 22a, 22b, 28) zwischen den Auflageflächen der Rollen (3a, 3b) umfasst, wenn sich die Installation im Zwischenzustand befindet, wobei sich die Zwischenauflagefläche (6, 22a, 22b, 28) in der Verlängerung der Auflagefläche der zu ersetzenden Rolle (3a) und der Auflagefläche der neuen Rolle (3b) befindet, um das Band (2) zu tragen.

5. Installation nach einem der vorhergehenden Ansprüche, wobei der maximale Abstand zwischen den Auflageflächen der Rollen (3a, 3b) in der Bewegungsrichtung der Rollen (3a, 3b) kleiner oder gleich 900 mm ist, wenn die sich die Installation im Zwischenzustand befindet.

6. Installation nach dem vorhergehenden Anspruch, bei der im Zwischenzustand die neue Rolle (3b) an der zu ersetzenden Rolle (3a) anliegt.

7. Verfahren zum Ersetzen einer Rolle (3a), die durch eine neue Rolle (3b) ersetzt werden soll, in einer Installation zum Antreiben eines Glasbandes (2) in einer Produktionslinie für Floatglas, dessen dynamische Viskosität zwischen 1,5*10^10 et 5*10^10 Poises liegt, nach einem der vorhergehenden Ansprüche, umfassend die folgenden Schritte:
/1/ eine neue Rolle (3b) wird auf einer ersten Seite der Schleuse (1) platziert, wobei sich die Installation im Anfangszustand befindet,
/2/ die neue Rolle (3b) wird drehend angetrieben,
/3/ die neue Rolle (3b) wird durch eine Translationsbewegung in Ersetzungsrichtung nach innen in die Schleuse (1) bewegt, und die zu ersetzende Rolle (3a) wird in der gleichen Ersetzungsrichtung nach außen aus der Schleuse (1) bewegt, wobei sich die Installation im Zwischenzustand befindet,
/4/ die zu ersetzende Rolle (3a) und die neue Rolle (3b) werden bewegt, bis sich die Installation im Endzustand befindet.

8. Verfahren nach Anspruch 7, wobei in Schritt /2/ und für mindestens einen Teil der Dauer des Zwischenzustands die neue Rolle (3b) mit einer Umfangsdrehzahl angetrieben wird, die im Wesentlichen mit derjenigen der zu ersetzenden Rolle (3a) identisch ist.

9. Verfahren nach Anspruch 7 oder Anspruch 8, wobei in Schritt /2/ und für mindestens einen Teil der Dauer des Zwischenzustands die neue Rolle (3b) mit einer anderen Umfangsdrehzahl als die zu ersetzende Rolle (3a) angetrieben wird, um eine Seitenkraft auf das Glasband (2) auszuüben, um es in der Achse der Schleuse (1) zu halten.

## Claims

1. Apparatus for driving a ribbon (2) of glass in a float glass production line, with a dynamic viscosity between 1.5*10^10 and 5*10^10 poises, the installation comprising an airlock (1) for exiting a bath of tin, the airlock comprising at least one roll (3a, 3b) for lifting the ribbon (2), comprising a table able to support the ribbon, the installation further comprising a device for replacing at least a roll (3a) to be replaced from the lock by a new roll (3b), the replacing device comprising a displacement system of the roll (3a) to be replaced and the new roll (3b) between the inside and outside of the lock (1) by a translation movement according to the same direction of displacement in relation to the lock (1), the installation can take at least three states by operating the displacement system:
• an initial state in which the table of the roll (3a) to be replaced is able to support the ribbon (2) over its entire width inside the lock (1), the new roll (3b) being placed on a first side outside the lock (1),
• a final state in which the table of the new roll (3b) is able to support inside the airlock (1) the ribbon (2) over its entire width, the roll (3a) to be replaced being placed on a second side outside the airlock (1) opposite to the first side,
• an intermediate state in which the tables of the two rolls (3a, 3b) are straddling between the inside and the outside of the lock (1) and are able to simultaneously support the ribbon (2).

2. Bath outlet installation according to claim 1, wherein, in the final state, the location of the new roll (3b) is identical to that of the roll (3a) to be replaced in the initial state.

3. Installation according to claim 1 or to claim 2, wherein each of the roll (3a) to be replaced and the new roll (3b) is equipped with an individual motorization (5a, 5b).

4. Installation according to any of the preceding claims, wherein the replacement device comprises a table (6, 22a, 22b, 28) between the roll tables (3a, 3b) when the system is in the intermediate state, the table (6, 22a, 22b, 28), the intermediate table (6, 22a, 22b, 28) being in the extension of the table of the roll (3a) to be replaced and the table of the new roll (3b) for supporting the ribbon (2).

5. Installation according to any of the preceding claims, wherein the maximum distance between the roll tables (3a, 3b) according to the direction of displacement of the rolls (3a, 3b) is less than or equal to 900 mm when the installation is in the intermediate state.

6. Installation according to the preceding claim, wherein, in the intermediate state, the new roll (3b) is joined to the roll (3a) to be replaced.

7. Method of replacing a roll (3a) to be replaced by a new roll (3b) in a apparatus for driving a ribbon (2) of glass in a float glass production line with a dynamic viscosity between 1.5*10^10 and 5*10^10 poises, et according to any of the preceding claims, comprising the following steps:
/1/ a new roll (3b) is positioned on a first side of the lock (1), the installation being in the initial state,
/2/ the new roll (3b) is driven in rotation,
/3/ the new roll (3b) is moved by a translational movement in a replacement direction towards the inside of the lock (1), and the roll (3a) to be replaced is moved in the same replacement direction towards the outside of the lock (1), the installation being in the intermediate state,
/4/ the roll (3a) to be replaced and the new roll (3b) are moved until the system is in the final state.

8. Method according to claim 7, wherein, in step /2/ and for at least part of the duration of the intermediate state, the new roll (3b) is driven at a peripheral speed substantially identical to that of the roll (3a) to be replaced.

9. Method according to claim 7 or to claim 8, in which, in step /2/ and for at least part of the duration of the intermediate state, the new roll (3b) is driven at a different peripheral rotational speed from that of the roll (3a) to be replaced in order to exert a lateral force on the glass ribbon (2) so as to keep it in the axis of the lock (1).
